# EUROPÄISCHE PATENTANMELDUNG

(11) **EP 3 449 757 A1**
(43) Veröffentlichungstag der Anmeldung: **06.03.2019**
(21) Anmeldenummer: 17189428.0
(22) Anmeldetag: 05.09.2017
(51) Int. Cl.: A44C 17/00, C14C 11/00

(54) **BEFESTIGUNG VON HARTMATERIALIEN AUF LEDER**

(71) Anmelder: Helcor-Leder-Tec GmbH, 37619 Hehlen (DE)
(72) Erfinder: HECHT, Hilmar, 37619 Bodenwerder (DE)
(74) Vertreter: Freischem & Partner Patentanwälte mbB

(57) **Zusammenfassung**

Die Erfindung betrifft ein Trägermaterial mit aufgeklebtem Hartmaterial, ein Verfahren zum Herstellen von beschichtetem Trägermaterial und ein Verfahren zum Befestigen von Hartmaterial auf beschichtetem Trägermaterial.

## Beschreibung

Die Erfindung betrifft ein Trägermaterial mit aufgeklebtem Hartmaterial, ein Verfahren zum Herstellen von beschichtetem Trägermaterial und ein Verfahren zum Befestigen von Hartmaterial auf beschichtetem Trägermaterial.

Üblicherweise werden Trägermaterialien wie beispielsweise Spaltleder mit Zurichtungen versehen, die in ihrer Oberschicht einen erheblichen Anteil an Griffmittel wie Silikon enthalten (vgl. WO 2005/047549 A1 oder WO 2009/049728 A2).

Es wird seit geraumer Zeit versucht, Hartmaterialien wie Schmucksteine auf Leder dauerhaft und hinreichend fest zu befestigen. Diese Anstrengungen gingen so weit, dass das Leder ausgestanzt wurde, um dann die Schmucksteine in den Vertiefungen der Ausstanzungen festzukleben (vgl. EP 1 907 223 B1, EP 1 860 971 B1, US 2008/0156426 A1). In dem sonst üblichen Verfahren wird ein Heißschmelzkleber verwendet, um die Schmucksteine direkt auf eine Lederoberfläche aufzubringen. Dieser Ansatz hatte bislang den Nachteil, dass im Fall eines Abreißens der Steine die Lederzurichtung mit abgerissen und somit die Lederoberfläche beschädigt wurde.

CH 413207 beschreibt exemplarisch das Aufkleben von Leder auf Glasoberflächen während des Trocknens des Leders, damit es beim Trocknen nicht schrumpft.

US 8,584,263 B1 beschreibt ein Lederarmband mit Schmucksteinen. Diese Schmucksteine werden mit Garn an dem Armband festgebunden, da bekannt ist, dass aufgeklebte Schmucksteine auf Leder nicht dauerhaft halten.

US 2002/0117258 A1 beschreibt ein Verfahren, mit dem Schmucksteine auf Stoff oder Leder aufgebracht werden können. Hierbei wird ein Heißschmelzkleber zwischen zwei zu verklebende Oberflächen gebracht und erst dann auf die Klebetemperatur erwärmt.

Bislang wurden Schmucksteine immer nur auf Trägermaterialien wie Leder aufgebracht, die mit einer Zurichtung mit einem erheblichen Anteil an Griffmittel zugerichtet waren, da die Oberfläche natürlich auch eine entsprechend angenehme Haptik aufweisen sollte.

Die Aufgabe der vorliegenden Erfindung ist es, eine Technologie bereitzustellen, mit der Hartmaterial wie Schmucksteine auf Trägermaterialien, wie beispielsweise Leder, dauerhafter und besser als bisher befestigt werden können.

In einer ersten Ausführungsform wird die der Erfindung zu Grunde liegende Aufgabe durch ein beschichtetes Trägermaterial mit aufgeklebtem Hartmaterial gelöst, wobei die Beschichtung wenigstens zwei Beschichtungsschichten aufweist, dadurch gekennzeichnet, dass der Gehalt an Griffmittel in der Oberschicht als äußerster Beschichtungsschicht in einem Bereich von 0,1 bis 7 Gew.% liegt. Es hat sich herausgestellt, dass schon allein die Reduktion des Anteils an Griffmittel in der Oberschicht eine erhebliche Verbesserung der Haftung von Hartmaterialien auf beschichtetem Trägermaterial bewirken konnte. Zudem hat sich herausgestellt, dass die erfindungsgemäß eingesetzte Beschichtung wesentlich besser am Leder haftet.

### Beschichtetes Trägermaterial

Das Trägermaterial ist vorzugsweise Leder, Lederfaserstoff und/oder Mikrofaservlies, insbesondere Rindsspaltleder.

Die Trägermaterialoberfläche hat vorzugsweise das Aussehen einer Ledernarbe, eines Nubukleders oder einer technischen Oberfläche. Die Stärke des Trägermaterials liegt vorzugsweise in einem Bereich von 0,8 bis 2 mm. Die Größe des Trägermaterials liegt vorzugsweise in einem Bereich von 1 bis 5 m². Die Trägermaterialoberfläche weist vorzugsweise im Bereich des aufgeklebten Hartmaterials keine Ausstanzungen, Bohrungen oder Löcher auf. Das Trägermaterial kann beispielsweise auch auf beiden Seiten auf den jeweiligen Beschichtungen des Trägermaterials mit Hartmaterial beklebt sein.

Die Oberfläche des Trägermaterials ist vorzugsweise rau und weist vorzugsweise eine spezifische Oberfläche von wenigstens 2 m² pro 1 m² Grundfläche des Trägermaterials auf. Die spezifische Oberfläche kann beispielsweise gemäß DIN ISO 9277:2014-01 ermittelt werden.

Die mittlere Rauheit Rₐ des unbeschichteten bzw. nicht zugerichteten Trägermaterials kann vorzugsweise in einem Bereich von 20 bis 400 µm, ganz besonders bevorzugt in einem Bereich von 30 bis 150 µm liegen. Die mittlere Rauheit kann beispielsweise mit einem Nanovea ST400 3D Profilometer gemäß ISO 4287 bzw. DIN 4768 bestimmt werden. Die mittlere Rauheit Rₐ entspricht dem arithmetischen Mittel der betragsmäßigen Abweichung von der Mittellinie.

### Hartmaterial

Das Hartmaterial ist vorzugsweise ein Flächengebilde oder Schmuckstein, ganz besonders bevorzugt ein Flächengebilde oder Schmuckstein aus Zirkonia (ZrO₂) oder Glas. Das Glas ist vorzugsweise ein Bleikristallglas. Das Hartmaterial ist vorzugsweise geschliffen, ganz besonders bevorzugt mit einem Brillantschliff versehen.

Das Hartmaterial liegt vorzugsweise in einer mittleren Korngröße (Median) in einem Bereich von 0,5 bis 3 mm vor.

Das Flächengebilde hat vorzugsweise eine Größe in einem Bereich von 0,1 bis 100 cm² Grundfläche. Die Form des Flächengebildes ist beliebig und kann beispielsweise ein Herz oder Kreis sein.

Vorzugsweise sind 0,01 bis 90% des Trägermaterials mit Hartmaterial beklebt.

Die einzelnen benachbarten Teile des Hartmaterials sind vorzugsweise in einem Abstand zueinander von wenigstens 0,2 mm, besonders bevorzugt wenigstens 1 mm aufgeklebt. Unabhängig davon sind die einzelnen benachbarten Teile des Hartmaterials vorzugsweise in einem Abstand zueinander von bis zu 200 mm, besonders bevorzugt bis zu 10 mm aufgeklebt.

### Beschichtung

Die Beschichtung (beispielsweise auch Zurichtung) weist vorzugsweise eine Stärke in einem Bereich von 20 bis 150 µm, ganz besonders bevorzugt in einem Bereich von 80 bis 120 µm, auf.

Die Beschichtung kann vorzugsweise aus wenigstens zwei, insbesondere drei, Schichten bestehen: einer Oberschicht (beispielsweise auch Appretur) als äußerster Beschichtungsschicht, einer Mittelschicht und/oder einer Verbindungsschicht (beispielsweise auch Grundierung; nämlich Verbindung der Oberschicht und ggf. Mittelschicht zum Trägermaterial). Die Stärke der Oberschicht beträgt vorteilhaft zwischen 30 und 45% und jene der Mittelschicht und der Verbindungsschicht gemeinsam zwischen 70 und 55% des Gesamtaufbaus der Beschichtung. Die Oberschicht ist also die äußerste Beschichtungsschicht.

Jede der wenigstens zwei oder drei Schichten kann beispielsweise überwiegend aus einem Polyurethan gebildet sein, das auch modifiziert sein kann. Das Polyurethan kann auch vernetzt sein. Jede der wenigstens zwei oder drei Schichten kann auch weitere übliche Additive und übliche Komponenten enthalten. Das Polyurethan kann vorzugsweise ein Polyester-Polyurethan-Elastomer sein.

### Oberschicht

Die Oberschicht (im Stand der Technik auch Appretur genannt) enthält vorzugsweise überwiegend ein Polyurethan, das auch modifiziert sein kann. Das Polyurethan kann auch vernetzt sein. Das Polyurethan kann vorzugsweise ein Polyester- und/oder Polyether-Polyurethan-Elastomer sein. Vorzugsweise liegt das Polyurethan als wässrige Dispersion vor. Erfindungsgemäß kann beispielsweise auch Polyester-Polyurethan-Elastomer eingesetzt werden, das üblicherweise zur Herstellung von Klebstoffen zum Kaschieren und Heißsiegeln verwendet wird.

Die Oberschicht kann auch weitere Additive wie Verlaufsmittel, Pigmente oder Griffmittel enthalten.

Vorzugsweise enthält die Oberschicht weniger als 0,1 Gew.% organisches Lösungsmittel, ganz besonders bevorzugt kein organisches Lösungsmittel. Organisches Lösungsmittel wird beispielsweise als Verlaufsmittel eingesetzt. Es hat sich gezeigt, dass die Verklebung des Hartmaterials mit einer Oberschicht mit einem sehr geringen Anteil an organischem Lösungsmittel oder sogar ohne organisches Lösungsmittel besser ist.

Vorzugsweise enthält die Oberschicht weniger als 10 Gew.%, besonders bevorzugt weniger als 1 Gew.%, Polyacrylat, ganz besonders bevorzugt kein Polyacrylat. Es hat sich gezeigt, dass dann die Verklebung des Hartmaterials mit der Oberschicht besser ist.

Vorzugsweise enthält die Oberschicht Polycarbonat in einem Bereich von 8 bis 40 Gew.%, ganz besonders bevorzugt 10 bis 25 Gew.%. Dadurch kann auf Polysiloxane bzw. Silikone ganz oder fast ganz verzichtet werden, so dass die Haftung des Hartmaterials an dem Trägermaterial deutlich verbessert werden kann.

### Griffmitttel

Der erste Auftrag auf die Matrize, beispielsweise die Oberschicht, bestimmt vor allem Aussehen und Haptik des beschichteten Trägermaterials. Die Haptik des beschichteten Trägermaterials kann von trocken bis fettig oder wachsartig schmalzig variiert werden. Das Griffmittel kann in der Beschichtung, vorzugsweise in der Oberschicht, enthalten sein und ausgewählt sein aus Silikonen (d.h. Polysiloxanen), natürlichen oder synthetischen Wachsen, Paraffinölemulsionen, emulgierenden oder emulgierten natürlichen Weichmacherölen, synthetischen Esterweichmachern, polymeren Weichharzen, feinstverteilten Kieselsäurederivaten oder Mischungen derselben.

Das Griffmittel enthält damit Stoffe, die als Trennmittel wirken können, das heißt die Haftungswirkung auf der Oberfläche herabsetzen können. Daher konnten beispielsweise bislang Schmucksteine nicht auf zugerichtete Leder aufgeklebt werden, ohne leicht wieder abzufallen. Andererseits gab es Berichte von Verklebungen, bei denen die Zurichtung beim Abreißen der Steine mit abreißt, so dass die Lederoberfläche zerstört wurde.

Das Griffmittel ist vorzugsweise ein Polysiloxan. Das Polysiloxan ist vorzugsweise ausgewählt aus der Gruppe carboxyfunktionelles Siloxan, Aminosiloxan, epoxymodifiziertes Siloxan oder Mischungen derselben. Besonders bevorzugt enthält das Griffmittel Poly[3-((2-aminoethyl)amino)propyl]methyl(dimethyl)siloxan, insbesondere wenn dies 2-hexyloxyethoxy-terminiert oder methoxy-terminiert ist. Das Griffmittel ist vorzugsweise ein Feststoff. Das Griffmittel (als solches, beispielsweise eingesetzt als Feststoffanteil in der Dispersion des Griffmittels) ist in der Formulierung für die Oberschicht (bzw. Appretur) vorzugsweise in einem Bereich von 0,1 bis 6 Gew.%, besonders bevorzugt 0,4 bis 0,8 Gew.%, enthalten.

Das Griffmittel kann als Dispersion in der Formulierung für die Oberschicht enthalten sein. Die Dispersion des Griffmittels ist vorzugsweise bei Raumtemperatur flüssig, ganz besonders bevorzugt mit einer Viskosität, die größer als die Viskosität von Glycerin bei gleichen Messbedingungen ist. Diese Dispersion ist vorzugsweise wässrig. Der Feststoffgehalt dieser Dispersion des Griffmittels kann vorzugsweise in einem Bereich von 50 bis 70 Gew.% liegen. Die Dispersion des Griffmittels kann vorzugsweise in der Formulierung für die Oberschicht in einem Bereich von 0,1 bis 6 Gew.%, besonders bevorzugt in einem Bereich von 0,8 bis 1,2 Gew.%, enthalten sein.

Das Griffmittel ist in der getrockneten Oberschicht vorzugsweise in einem Bereich von 0,05 bis 3,5 Gew.%, besonders bevorzugt 1 bis 2 Gew.%, enthalten. Der erfindungsgemäß schon vergleichsweise recht niedrige und bevorzugt noch geringere Anteil an Griffmittel erlaubt erstmals die wesentlich verbesserte Haftung von Hartmaterialien wie Schmucksteinen auf Trägermaterialien wie Lederoberflächen.

Griffmittel oder eine Mischung von Griffmitteln, insbesondere bevorzugt Polysiloxan, sind also in der getrockneten Oberschicht vorzugsweise in einer Menge von 1 bis 2 Gew.% enthalten. Es hat sich gezeigt, dass die Haptik der Trägermaterialoberflächen durch andere Polymere wie Polycarbonat so weit verbessert werden kann, dass auf Polysiloxan fast ganz verzichtet werden kann. Dadurch konnte die Haftfestigkeit des Hartmaterials am Leder verbessert werden. Überraschend hat sich allerdings gezeigt, dass beispielsweise eine Lederoberfläche häufiger bei Abriss der Hartmaterialien zerstört wurde, wenn auf Griffmittel ganz verzichtet wurde.

### Klebstoff

Das Hartmaterial ist beispielsweise mit einem Klebstoff auf dem Trägermaterial festgeklebt. Der Klebstoff ist vorzugsweise ein Heißschmelzklebstoff. Der Klebstoff kann vorzugsweise ein Polyamid-Klebstoff, ganz besonders bevorzugt ein Polyamid-Heißschmelzklebstoff sein.

Die Dicke der Klebstoffschicht liegt vorzugsweise in einem Bereich von 1 bis 500 µm, ganz besonders bevorzugt in einem Bereich von 50 bis 300 µm.

Der Klebstoff ist vor der Verklebung vorzugsweise auf dem Hartmaterial und nicht auf dem Trägermaterial aufgebracht.

### Weitere Ausführungsformen

Die zuvor beschriebenen bevorzugten Ausführungsformen erstrecken sich, sofern für den Fachmann sinnvoll anwendbar, auch auf die folgenden weiteren Ausführungsformen.

In einer weiteren Ausführungsform wird die der Erfindung zu Grunde liegende Aufgabe durch ein Verfahren zum Beschichten von Trägermaterial gelöst, bei dem als Beschichtung wenigstens zwei Beschichtungsschichten aufgetragen werden, dadurch gekennzeichnet, dass der Gehalt an Griffmittel in der Oberschicht als äußerster Beschichtungsschicht in einem Bereich von 0,1 bis 7 Gew.% liegt.

Vorzugsweise handelt es sich bei dem Verfahren um ein Verfahren zur Herstellung des erfindungsgemäß beschichteten Trägermaterials.

Der Gehalt an Griffmittel in der Formulierung für die Oberschicht liegt vorzugsweise in einem Bereich von 0,1 bis 6 Gew.%, besonders bevorzugt in einem Bereich von 0,4 bis 0,8 Gew.%. Das Griffmittel kann als Dispersion in der Formulierung für die Oberschicht enthalten sein. Diese Dispersion ist vorzugsweise wässrig. Der Feststoffgehalt dieser Dispersion des Griffmittels kann vorzugsweise in einem Bereich von 50 bis 70 Gew.% liegen. Die Dispersion des Griffmittels kann vorzugsweise in der Formulierung für die Oberschicht in einem Bereich von 0,1 bis 6 Gew.%, besonders bevorzugt in einem Bereich von 0,8 bis 1,2 Gew.%, enthalten sein.

Das Verfahren gleicht vorzugsweise in weiten Teilen den in Patentanmeldungen wie beispielsweise EP 0 105 046 und DE 2008 1008934 beschriebenen Verfahren, sofern in dieser Patentanmeldung nicht abweichend beschrieben.

Vorzugsweise wird die Oberschicht im Rahmen des Verfahrens zunächst auf eine Silikonmatrize mit einer Oberschicht-Zusammensetzung (auch Formulierung für die Oberschicht) aufgebracht.

Zunächst wird also vorzugsweise eine Silikonmatrize bereitgestellt. Die Silikonmatrize weist auf ihrer Oberfläche vorzugsweise die negative Oberflächenstruktur der nachher erwünschten Trägermaterialoberfläche auf. Wünscht man sich also eine Oberfläche wie ein Narbenleder vom Kalb, dann gestaltet man die Oberfläche der Silikonmatrize beispielsweise wie die Negativform der Oberfläche des Narbenleders vom Kalb. Im einfachsten Fall formt man hierzu bei der Herstellung der Silikonmatrize beispielsweise das Narbenleder vom Kalb ab. Die Silikonmatrize hat vorzugsweise eine Dicke in einem Bereich von 0,5 bis 3 mm. Die Silikonmatrize kann zur Verstärkung beispielsweise auf einer Metall-, Holz-, DMF-, beschichteten Pressspan- oder Kunststoffplatte angeordnet sein.

In einem weiteren Schritt wird vorzugsweise auf diese Silikonmatrize eine Oberschicht (später auf dem Trägermaterial die äußerste Beschichtungsschicht) mit einer Oberschicht-Zusammensetzung, vorzugsweise eine Polyurethandispersion (PU Dispersion), aufgebracht, um die Oberschicht zu erzeugen. Vorzugsweise wird diese Oberschicht-Zusammensetzung auf die erwärmte Silikonmatrize aufgesprüht und unter Zuführung vom Wärme und damit einhergehendem Wasserentzug getrocknet.

Unmittelbar vor dem Aufsprühen der Oberschicht-Zusammensetzung wird die Silikonmatrize vorzugsweise auf eine Temperatur in einem Bereich von 75 bis 105 °C erwärmt.

Die Oberschicht-Zusammensetzung ist vorzugsweise eine Dispersion und kann vorzugsweise einen Anteil an Dispersionsmedium in einem Bereich von 50 bis 70 Gew.% und im Übrigen disperse Phase aufweisen. Das Dispersionsmedium ist vorzugsweise Wasser.

Die einzelnen Bestandteile können vorzugsweise auch schon fertig als Dispersion eingesetzt werden. Dadurch muss kein Wasser zugefügt werden und die Bestandteile können im flüssigen Zustand leichter dosiert werden.

Das Bindemittel liegt vorzugsweise als wässrige Dispersion mit einem Feststoffgehalt in einem Bereich von 30 bis 50 Gew.% vor.

Das Griffmittel liegt vorzugsweise als wässrige Dispersion mit einem Feststoffgehalt in einem Bereich von 60 bis 75 Gew.% vor.

Etwaige Pigmente liegen vorzugsweise als wässrige Dispersion mit einem Feststoffgehalt in einem Bereich von 50 bis 80 Gew.% vor.

Vernetzer liegt vorzugsweise als Dispersion mit einem Feststoffgehalt in einem Bereich von 70 bis 90 Gew.% vor. Das Dispersionsmedium des Vernetzers ist vorzugsweise aprotisch und polar, ganz besonders bevorzugt ein Acetat (wie beispielsweise Propylenglykoldiacetat).

Die Oberschicht-Zusammensetzung enthält vorzugsweise
a) 100 Gewichtsteile Bindemittel-Dispersion, vorzugsweise ausgewählt aus Polycarbonat, Polyurethan und/oder Mischungen derselben, und
b) 1 bis 20 Gewichtsteile Dispersionen mit Zuschlagstoffen ausgewählt aus Vernetzern, Griffmitteln, Mattiermitteln, Pigmenten, Weichmachern, Emulgatoren, Netzmitteln, Verlaufmitteln, Füllstoffen und/oder Mischungen derselben.

Vorzugsweise kann die Oberschicht-Zusammensetzung 0,1 bis 6 Gewichtsteile Griffmitteldispersion enthalten.

Vorzugsweise kann die Oberschicht-Zusammensetzung 1 bis 2 Gewichtsteile Vernetzerdispersion enthalten.

Vorzugsweise kann die Oberschicht-Zusammensetzung 1 bis 4 Gewichtsteile Pigmentdispersion enthalten.

Die Oberschicht-Zusammensetzung enthält vorzugsweise
a) 30 bis 50 Gewichtsteile Bindemittel als Feststoff, vorzugsweise ausgewählt aus Polycarbonat, Polyurethan und/oder Mischungen derselben, und
b) 1 bis 20 Gewichtsteile Zuschlagstoffe ausgewählt aus Vernetzern, Griffmitteln, Mattiermitteln, Pigmenten, Weichmachern, Emulgatoren, Netzmitteln, Verlaufmitteln, Füllstoffen und/oder Mischungen derselben, und
c) 30 bis 90 Gewichtsteile Wasser.

Der Anteil an Bindemittel, beispielsweise Polyurethan als Feststoff, in der Oberschicht-Zusammensetzung liegt vorzugsweise bei 40 Gewichtsteilen.

Füllstoffe können beispielsweise Mikrohohlkugeln (z.B. gasgefüllt aus Kunststoff) sein.

Der Anteil an Vernetzer in der Oberschicht-Zusammensetzung liegt vorzugsweise in einem Bereich von 0,5 bis 8 Gewichtsteilen, ganz besonders bevorzugt in einem Bereich von 1 bis 2 Gewichtsteilen. Dies hat in diesem konkreten Anwendungsfall der vorliegenden Erfindung den Vorteil, dass die Beschichtungs-Zusammensetzung durch den vergleichsweise geringen Anteil an Vernetzer langsamer aushärtet, so dass die Beschichtung noch nach Verkleben mit dem Hartmaterial zu Ende aushärten kann und die Beschichtung sich mit dem Klebstoff wie beispielsweise dem Heißschmelzklebstoff für das Hartmaterial besser verbinden kann. Der Vernetzer ist vorzugsweise ein reaktives, aliphatisches Polyisocyanat.

Die Oberschicht-Zusammensetzung ist also vorzugsweise eine Dispersion, die 0,5 bis 8 Gewichtsteile, besonders bevorzugt 1 bis 2 Gewichtsteile, Vernetzer auf 40 Gewichtsteile Bindemittel als Feststoff enthält.

Der Anteil an Griffmittel in der Oberschicht-Zusammensetzung liegt vorzugsweise in einem Bereich von 0,05 bis 4 Gewichtsteilen, ganz besonders bevorzugt in einem Bereich von 0,4 bis 0,8 Gewichtsteilen. Das Griffmittel kann ein Silikon bzw. Polysiloxan sein.

Die Oberschicht-Zusammensetzung ist vorzugsweise eine Dispersion, die in der dispersen Phase 0,05 bis 4 Gewichtsteile, besonders bevorzugt 0,4 bis 0,8 Gewichtsteile, Griffmittel auf 40 Gewichtsteile Bindemittel als Feststoff enthält.

Vorzugsweise enthält die Oberschicht-Zusammensetzung weniger als 0,1 Gewichtsteile organisches Lösungsmittel, ganz besonders bevorzugt kein Lösungsmittel. Lösungsmittel wird beispielsweise als Verlaufsmittel eingesetzt. Es hat sich gezeigt, dass die Verklebung des Hartmaterials mit einem sehr geringen Anteil an Lösungsmittel oder sogar ohne Lösungsmittel in der äußersten Beschichtungsschicht besser ist.

Vorzugsweise enthält die Oberschicht-Zusammensetzung weniger als 10 Gewichtsteile Polyacrylat, ganz besonders bevorzugt kein Polyacrylat. Es hat sich gezeigt, dass die Verklebung des Hartmaterials mit einem sehr geringen Anteil an Polyacrylat oder sogar ohne Polyacrylat in der äußersten Beschichtungsschicht besser ist.

Vorzugsweise enthält die Oberschicht-Zusammensetzung Polycarbonatfeststoff als Bindemittel in einem Bereich von 3 bis 10 Gewichtsteilen. Dadurch konnte auf Polysiloxane bzw. Silikone ganz oder fast ganz verzichtet werden, so dass die Haftung des Hartmaterials an der Trägermaterialoberfläche deutlich verbessert werden konnte.

Die Oberschicht-Zusammensetzung wird vorzugsweise in einer Menge in einem Bereich von 100 bis 250 g/m² (insbesondere bevorzugt auf die Silikonmatrize) aufgetragen, besonders bevorzugt aufgesprüht.

Anschließend wird die aufgebrachte Oberschicht-Zusammensetzung vorzugsweise getrocknet. Diese Trocknung geschieht vorzugsweise bei einer Temperatur in einem Bereich von 60 bis 90 °C, insbesondere bevorzugt in einem Bereich von 70 bis 80 °C. Die Zeit der Trocknung liegt vorzugsweise in einem Bereich von 30 bis 180 s.

Anschließend kann vorzugsweise eine Mittelschicht-Zusammensetzung aufgebracht werden, um die Mittelschicht zu erzeugen. Die Mittelschicht-Zusammensetzung enthält vorzugsweise kristalline Struktur aufweisende aliphatische Polyester- und/oder Polyether-Polyurethandispersionen und/oder Polyacrylatdispersionen und/oder deren Mischungen. Vorzugsweise liegt der Feststoffanteil in der Mittelschicht-Zusammensetzung in einem Bereich von 30 bis 50 Gew.%. Das Dispersionsmedium ist vorzugsweise Wasser.

Die Mittelschicht-Zusammensetzung wird vorzugsweise in einer Menge in einem Bereich von 100 bis 250 g/m² (insbesondere bevorzugt auf die auf der Silikonmatrize durch Trocknung verfestigte Oberschicht-Zusammensetzung) aufgetragen, besonders bevorzugt aufgesprüht.

Anschließend wird die aufgebrachte Mittelschicht-Zusammensetzung vorzugsweise getrocknet und damit verfestigt. Diese Trocknung geschieht vorzugsweise bei einer Temperatur in einem Bereich von 40 bis 80 °C, insbesondere bevorzugt in einem Bereich von 50 bis 60 °C. Die Dauer der Trocknung liegt vorzugsweise in einem Bereich von 60 bis 180 s.

Vorzugsweise wird auf das Trägermaterial, insbesondere bevorzugt auf ein Spaltleder, eine Verbindungsschicht-Zusammensetzung aufgetragen, um die Grundierung bzw. die Verbindung des Trägermaterials zu der auf der Silikonmatrize aufgetrockneten und verfestigten wenigstens einen aufgetragenen Beschichtungsschicht zu erzeugen. Die Verbindungsschicht-Zusammensetzung kann beispielsweise eine der Mittelschicht-Zusammensetzung ähnliche Zusammensetzung sein. Die Viskosität kann beispielsweise durch Verwendung eines Verdickers erhöht werden. Der Verdicker kann ammoniakhaltig sein oder auf Natriumpolyacrylat-Basis eingesetzt werden. Der Gehalt an Verdicker in der Verbindungsschicht-Zusammensetzung liegt vorzugsweise in einem Bereich von 0,5 bis 10 Gewichtsteile auf 100 Gewichtsteile einer Bindemittel-Dispersion mit einem Feststoffgehalt von 40 Gew.% (wie beispielsweise ein Polyurethan).

Die Verbindungsschicht-Zusammensetzung wird vorzugsweise mit einem Rollcoater auf das Leder aufgetragen, besonders bevorzugt in einer Menge in einem Bereich von 100 bis 280 g/m², ganz besonders bevorzugt in einem Bereich von 120 bis 180 g/m².

Anschließend wird vorzugsweise das Trägermaterial mit der aufgetragenen Verbindungsschicht so auf die Silikonmatrize mit der wenigstens einen aufgetragenen Beschichtung aufgelegt, dass die zuletzt aufgetragene Beschichtung auf der Silikonmatrize mit der Verbindungsschicht kontaktiert wird.

Danach wird die Silikonmatrize mit dem darauf aufgelegten Trägermaterial vorzugsweise verpresst. Dies geschieht vorzugsweise mit einer oder mehreren Rollenpressen und/oder einer Vakuumpresse und/oder Plattenpresse.

Anschließend wird die Silikonmatrize mit dem darauf aufgelegten Trägermaterial vorzugsweise auf eine Temperatur in einem Bereich von 60 bis 90 °C erwärmt.

Im nächsten Schritt wird die Silikonmatrize mit dem darauf aufgelegten Trägermaterial vorzugsweise in einer Plattenpresse, gegebenenfalls mit beheizbaren Platten, verpresst, um die Verbindungsschicht mit der zuletzt aufgetragenen Schicht auf der Silikonmatrize fest zu verbinden. Dabei wird die Temperatur, besonders bevorzugt mit Hilfe der beheizbaren Platten, vorzugsweise in einem Bereich von 50 bis 80 °C eingestellt.

Anschließend wird das aus Trägermaterial und der Beschichtung gebildete Verbundmaterial aus der Silikonmatrize entformt.

In einer weiteren Ausführungsform wird die der Erfindung zu Grunde liegende Aufgabe durch ein Verfahren zum Befestigen von Hartmaterial auf Trägermaterial gelöst, bei dem das Hartmaterial auf einem beschichteten Trägermaterial aufgeklebt wird, dessen Beschichtung wenigstens zwei Beschichtungsschichten aufweist, dadurch gekennzeichnet, dass der Gehalt an Griffmittel in der Oberschicht als äußerster Beschichtungsschicht in einem Bereich von 0,1 bis 7 Gew.% liegt.

Beispielsweise wird ein Trägermaterial eingesetzt, dessen erfindungsgemäße Beschichtung ein Alter von 1 bis 90 Tagen, bevorzugt wenigstens 30 Tage, hat. Es hat sich gezeigt, dass sich bei diesem Mindestalter der Beschichtung beispielsweise des Rindsspaltleders die Haftung des aufgeklebten Hartmaterials an demselben wesentlich verbessert.

Vorzugsweise handelt es sich bei dem Verfahren um ein Verfahren zum Befestigen von Hartmaterial auf dem erfindungsgemäßen beschichteten Trägermaterial.

Vorzugsweise wird das beschichtete Trägermaterial vor dem Befestigen von Hartmaterial hängend getrocknet. Vorzugsweise wird das beschichtete Trägermaterial vor dem Befestigen über einen Zeitraum von 1 bis 5 h getrocknet. Die Trocknung geschieht vorzugsweise bei Raumtemperatur.

Das Griffmittel ist in der getrocknete Oberschicht vorzugsweise in einem Bereich von 0,05 bis 3,5 Gew.%, besonders bevorzugt 1 bis 2 Gew.%, enthalten.

Das Hartmaterial wird vorzugsweise auf das beschichtete Trägermaterial aufgebracht, nachdem die Oberschicht und/oder die Beschichtung endvernetzt ist.

Vorzugsweise ist auf derjenigen Seite des Hartmaterials, die dem Trägermaterial zugewandt ist, eine Klebstoffschicht aufgebracht. Das Hartmaterial und der Klebstoff können wie weiter oben dargestellt bevorzugte Ausführungsformen annehmen.

Vorzugsweise wird das Hartmaterial mit der mit Klebstoff beschichteten Fläche auf das Trägermaterial angepresst. Das Anpressen geschieht vorzugsweise mit Hilfe eines Ausgleichskörpers, besonders bevorzugt eines Silikonkissens. Der Ausgleichskörper weist wiederum vorzugsweise eine Dicke in einem Bereich von 1 bis 10 mm auf. Der Ausgleichskörper muss weich sein und in der Lage sein, den Druck gleichmäßig auf das Hartmaterial zu verteilen. Vorzugsweise wird das Hartmaterial mit einer Bügelpresse angepresst.

Vorzugsweise wird der beim Anpressen des Hartmaterials an das beschichtete Trägermaterial ausgeübte Druck derart eingestellt, dass das beschichtete Trägermaterial maximal 1 mm, insbesondere bevorzugt maximal 0,5 mm, eingedrückt wird. Unabhängig davon wird der Druck so eingestellt, dass das beschichtete Trägermaterial wenigstens 0,01 mm eingedrückt wird.

Beim Anpressen wird das beschichtete Trägermaterial und/oder das Hartmaterial vorzugsweise auf eine Temperatur in einem Bereich von 100 bis 180 °C, insbesondere bevorzugt in einem Bereich von 120 bis 160 °C, erwärmt.

Das Hartmaterial wird vorzugsweise an das beschichtete Trägermaterial über einen Zeitraum in einem Bereich von 10 bis 200 s, besonders bevorzugt in einem Bereich von 20 bis 70 s, angepresst.

Vorzugsweise wird der Druck beim Anpressen in einem Winkel von 85 bis 95 °, insbesondere bevorzugt senkrecht, zum beschichteten Trägermaterial ausgeübt.

Die in der vorliegenden Beschreibung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### Ausführungsbeispiel

Es wurde eine 1 m x 1 m große 1 mm dicke Silikonmatrize auf einer ebenso großen 2 mm dicken Aluminiumplatte verklebt, die auf ihrer freien Oberfläche die negative Struktur eines Nubukleders aufwies. Die Silikonmatrize wurde auf 90 °C erwärmt. Auf diese Silikonmatrize wurde 140 g/m² einer wässrigen Oberschichtzusammensetzung aufgesprüht, um die Oberschicht zu erhalten. Diese Oberschichtzusammensetzung enthielt 80 Gewichtsteile einer Polyurethandispersion mit einem Feststoffgehalt von 40 Gew.%, 20 Gewichtsteile einer Polycarbonatdispersion mit einem Feststoffgehalt von 40 Gew.%., 1 Gewichtsteil einer Polysiloxandispersion (Griffmittel) mit einem Feststoffgehalt von 60 Gew.%., 1,5 Gewichtsteile einer Vernetzerdispersion (reaktive, aliphatische Polyisocyanatdispersion in Propylenglykoldiacetat) mit einem Feststoffgehalt von 80 Gew.%., 2 Gewichtsteile einer Pigmentdispersion (Schwarzpigment auf Rußbasis) mit einem Feststoffgehalt von 65 Gew.%. Das Dispersionsmedium war mit Ausnahme des Vernetzers jeweils Wasser. Der Vernetzer war in Propylenglykoldiacetat dispergiert.

Anschließend wurde diese Oberschicht bei 65 °C für 120 s getrocknet.

Nach der Trocknung der Oberschicht wurde eine Mittelschichtzusammensetzung in einer Menge von 100 g/m² auf die getrocknete Oberschicht aufgesprüht, um die Mittelschicht zu erhalten. Diese Mittelschichtzusammensetzung war eine für Zurichtungen von Lederoberflächen übliche Mischung aus Polyacrylat- und Polyurethandispersionen, wobei allerdings als Polyurethan ein Polyester-Polyurethan-Elastomer eingesetzt wurde, das sonst üblicherweise als Klebrohstoff zum Kaschieren oder Heißsiegeln eingesetzt wird.

Diese aufgesprühte Mittelschichtzusammensetzung wurde bei 65 °C für 120 s getrocknet.

Parallel wurde auf eine 1 m x 1 m große Spaltlederoberfläche aus Rindsspaltleder eine Verbindungsschicht in einer Menge von 120 g/m² mit einem Rollcoater aufgetragen. Die Zusammensetzung für die Verbindungsschicht bestand aus der Zusammensetzung für die Mittelschicht, die mit einem Verdicker auf Natriumpolyacrylatbasis in einer Menge von 2 Gewichtsteilen Verdicker auf 100 Gewichtsteile Polyester-Polyurethan-Dispersion verdickt worden war.

Die noch nasse Verbindungsschicht auf der Rindsspaltlederoberfläche wurde nun auf die Mittelschicht aufgelegt und zunächst mit einer Rollenpresse und mit einer Vakuumpresse mit sonst üblichem Andruck verpresst. Anschließend wurde die beschichtete Silikonmatrize mit dem Rindsspaltleder in einer Plattenpresse bei einer Temperatur von 70 °C mit einem sonst üblichen Andruck 0,7 bis 1,5 kg/cm² verpresst.

Nach der Verpressung wurde das beschichtete Rindsspaltleder aus der Silikonmatrize entformt.

Das beschichtete Rindsspaltleder wurde 2,5 h bei Raumtemperatur aufgehängt getrocknet.

Anschließend wurden auf einer ihrer Oberflächen mit einem Polyamid-Schmelzkleber versehene Bleiglas-Kristalle auf die beschichtete Spaltlederoberfläche aufgelegt und mit einer Bügelpresse bei einer Temperatur von 120 °C 45 s lang angepresst. Dabei wurden die Kristalle auf ein 5 mm dickes Silikonkissen gelegt, damit die Kristalle beim Anpressen nicht verkanten und leichter senkrecht angepresst werden können. Der Druck der Bügelpresse wurde dann von der Rückseite der Lederoberfläche ausgeübt. Der Druck der Bügelpresse wurde so gewählt, dass das beschichtete Leder 0,1 mm eingedrückt wurde.

Diese so aufgebrachten Kristalle wiesen so eine wesentlich bessere Haftung zum Leder als bisher auf. Um die Kristalle dennoch abzureißen, musste erheblich mehr Aufwand betrieben werden. Trotzdem wurde die Beschichtung der Lederoberfläche beim Abreißen nicht beschädigt.

## Patentansprüche

1. Beschichtetes Trägermaterial mit aufgeklebtem Hartmaterial, wobei die Beschichtung wenigstens zwei Beschichtungsschichten aufweist, **dadurch gekennzeichnet, dass** der Gehalt an Griffmittel in der Oberschicht als äußerster Beschichtungsschicht in einem Bereich von 0,1 bis 7 Gew.% liegt.

2. Beschichtetes Trägermaterial gemäß Anspruch 1, **dadurch gekennzeichnet, dass** das Trägermaterial ausgewählt ist aus der Gruppe Leder, Lederfaserstoff oder Mikrofaser, wobei besonders bevorzugt das Griffmittel, ganz besonders bevorzugt Polysiloxan, in der Oberschicht in einem Bereich von 0,05 bis 3,5 Gew.%, besonders bevorzugt 1 bis 2 Gew.%, enthalten ist.

3. Beschichtetes Trägermaterial gemäß einem der Ansprüche 1 bis 2, **dadurch gekennzeichnet, dass** die Oberschicht Polycarbonat in einem Bereich von 8 bis 40 Gew.% enthält.

4. Beschichtetes Trägermaterial gemäß einem der Ansprüche 1 bis 3, **dadurch gekennzeichnet, dass** der Klebstoff ein Heißschmelzklebstoff, ganz besonders bevorzugt ein Polyamid-Heißschmelzklebstoff, ist.

5. Beschichtetes Trägermaterial gemäß einem der Ansprüche 1 bis 4, **dadurch gekennzeichnet, dass** das Hartmaterial ein Schmuckstein und/oder Glas ist.

6. Verfahren zum Beschichten von Trägermaterial, bei dem als Beschichtung wenigstens zwei Beschichtungsschichten aufgetragen werden, **dadurch gekennzeichnet, dass** der Gehalt an Griffmittel in der Oberschicht als äußerster Beschichtungsschicht in einem Bereich von 0,1 bis 7 Gew.% liegt.

7. Verfahren gemäß Anspruch 6, **dadurch gekennzeichnet, dass** die Oberschicht im Rahmen des Verfahrens zunächst auf eine Silikonmatrize mit einer Oberschicht-Zusammensetzung aufgebracht wird.

8. Verfahren gemäß Anspruch 7, **dadurch gekennzeichnet, dass** die Oberschicht-Zusammensetzung eine Dispersion ist, die 0,5 bis 8 Gewichtsteile Vernetzer auf 40 Gewichtsteile Bindemittel enthält.

9. Verfahren gemäß einem der Ansprüche 6 bis 8, **dadurch gekennzeichnet, dass** die Oberschicht-Zusammensetzung eine Dispersion ist, die 0,1 bis 6 Gewichtsteile Griffmittel auf 40 Gewichtsteile Bindemittel enthält.

10. Verfahren gemäß einem der Ansprüche 6 bis 9, **dadurch gekennzeichnet, dass** die Oberschicht-Zusammensetzung in einer Menge in einem Bereich von100 bis 250 g/m² aufgetragen wird.

11. Verfahren zum Befestigen von Hartmaterial auf Trägermaterial, bei dem das Hartmaterial auf beschichtetem Trägermaterial aufgeklebt wird, das in der Beschichtung wenigstens zwei Beschichtungsschichten aufweist, **dadurch gekennzeichnet, dass** der Gehalt an Griffmittel in der Oberschicht als äußerster Beschichtungsschicht in einem Bereich von 0,1 bis 7 Gew.% liegt.

12. Verfahren gemäß Anspruch 11, **dadurch gekennzeichnet, dass** das Hartmaterial auf das Trägermaterial aufgebracht wird, nachdem die Oberschicht und/oder die Beschichtung endvernetzt ist.

13. Verfahren gemäß einem der Ansprüche 11 bis 12, **dadurch gekennzeichnet, dass** das Hartmaterial an das beschichtete Trägermaterial angepresst wird und dass insbesondere bevorzugt das Anpressen mit Hilfe eines Ausgleichskörpers, ganz besonders bevorzugt eines Silikonkissens, geschieht.

14. Verfahren gemäß Anspruch 13, **dadurch gekennzeichnet, dass** der beim Anpressen des Hartmaterials an die Trägermaterialoberfläche ausgeübte Druck so eingestellt wird, dass die Trägermaterialoberfläche maximal 1 mm, insbesondere bevorzugt maximal 0,5 mm, eingedrückt wird.

15. Verfahren gemäß einem der Ansprüche 13 bis 14, **dadurch gekennzeichnet, dass** das beschichtete Trägermaterial und/oder Hartmaterial beim Anpressen auf eine Temperatur in einem Bereich von 100 bis 180 °C, insbesondere bevorzugt in einem Bereich von 120 bis 160 °C, erwärmt wird.
